# EUROPEAN PATENT SPECIFICATION

(11) **EP 4 070 298 B1**
(45) Date of publication and mention of the grant of the patent: **31.01.2024**
(21) Application number: 19828138.8
(22) Date of filing: 06.12.2019
(51) Int. Cl.: G08C 17/02, G08C 23/02, G08C 23/04, G06F 21/30, H04N 7/14, H04N 7/15, G06F 21/44

(54) **METHOD FOR AUTHENTICATING A FIRST DEVICE THAT WILL BE USED FOR CONTROLLING A SECOND DEVICE AND COMMUNICATION SYSTEM**
VERFAHREN ZUR AUTHENTIFIZIERUNG EINER ERSTEN VORRICHTUNG ZUR STEUERUNG EINER ZWEITEN VORRICHTUNG UND KOMMUNIKATIONSSYSTEM
PROCÉDÉ D'AUTHENTIFICATION D'UN PREMIER DISPOSITIF QUI SERA UTILISÉ POUR COMMANDER UN SECOND DISPOSITIF ET SYSTÈME DE COMMUNICATION

(43) Date of publication of application: 12.10.2022
(73) Proprietor: Unify Patente GmbH & Co. KG, 81739 München (DE)
(72) Inventor: PASTRO, Rodrigo, Lake Worth, FL 33467 (US); GARBIN, Christian, Boca Raton, FL 33428 (US)
(74) Representative: Schaafhausen Patentanwälte PartGmbB
(86) International application number: PCT/US2019/064853
(87) International publication number: WO 2021/112868

(56) References cited:
- US-A1- 2013 093 962
- US-A1- 2015 109 399
- US-A1- 2019 362 064

## Description

### FIELD

The present invention relates to a method for authenticating a first device that will be used for controlling a second device and to a communication apparatus and a communication system configured to carry out embodiments of the method.

### BACKGROUND

Nowadays, it is common to use mobile devices, as a tablet or a mobile phone or the like, for controlling other devices that are located nearby, as for example video conference room equipment like Circuit Meeting Room (CMR).

However, some of the functions controlled by the mobile device may be of personal and confidential in nature. For example, a mobile device (e.g., a common tablet) has the ability to turn on the microphone and camera of the video conference room equipment (e.g., CMR).

### SUMMARY

Solutions known in prior art for verifying that the controlling mobile device is authorized to control the other device rely on location information, i.e., both devices communicate their location to decide if they are close to each other. However, this approach suffers from the flaw that the controlled device - as CMR - is not spoofed, by e.g., an actually faraway device reporting a false, nearby location.

Document US 2013/09396 A1 discloses a method of pairing a RF remote control by utilizing ultrasonic signals to pair with the closest video or audio component that is in the same room.

Thus, in order to prevent misuse of personal and confidential functions of, for example, a CMR, we have determined that it can be critical for the controlling device to be clearly and positively identified. Therefore, we have determined that there exists a problem of providing a method for identifying a controlling device without using a mechanism that relies only on information from the controlled device itself. This problem is solved by the inventive method for authenticating a first device that will be used for controlling a second device and by a communication system and communication apparatus that are configured to utilize an embodiment of our method.

According to an embodiment of the present invention, a method for authenticating a first device that will be used for controlling a second device is provided, wherein the first device and the second device are located within a predetermined range close to each other, the authentication method comprising the following steps: initially, receiving by the second device, a control command from the first device; the control command specifying a predetermined action to be performed by the second device; in response to the control command, initiating, by the second device, a validation procedure by sending a first signal or signal sequence to the first device, wherein the first signal or signal sequence is only detectable in an unobstructed close vicinity of the second device within the predetermined range; receiving, by the second device, a second signal or signal sequence from the first device; verifying, by the second device, whether the second signal or signal sequence matches the first signal or signal sequence, and, if the matching of the first and second signals or the first and second signal sequences is confirmed, performing, by the second device, the action specified by the control command issued by the first device.

According to a preferred embodiment of the invention, the first signal or signal sequence and the second signal or signal sequence is an acoustic signal or signal sequence, in particular, an acoustic pattern comprising a sequence of tones in specific durations and frequencies. It is noted that the term "signal" or "signal sequence" as used here could refer to audio signals, video signals, or image signals.

According to another preferred embodiment of the invention, the acoustic signal or signal sequence is inaudible for a human being.

According to still another preferred embodiment of the invention, the first signal or signal sequence and the second signal or signal sequence is an image or video.

According to yet another preferred embodiment of the invention, the first signal or signal sequence is randomly selected.

The first device may be a mobile device, as a mobile phone or a tablet or the like.

The second device may be a device for providing audio and video conferencing in a virtual conference room for a plurality of remotely located users, as e.g., CMR.

According to another preferred embodiment of the invention, the control command is a command for turning a microphone and/or a camera of the second device on or off.

Preferably, in the verifying step, if the matching of the first and second signals or the first and second signal sequences is not confirmed, a step of issuing a report, by the second device, comprising information on a malicious control attempt.

According to another preferred embodiment of the invention, the report further comprises information on the device that initiated the malicious control attempt, in particular, an originating network address, or a user agent.

Preferably, the verification procedure is carried out in real-time.

Moreover, according to the present invention, a communication system is provided, in particular, a device for providing audio and video conferencing for a plurality of remotely located users, which is configured to carry out the method for authenticating a first device that will be used for controlling a second device. The authenticating that is performed can also be considered authentifying the first device or an authentification of the first device.

It should be appreciated that the device for providing audio and video conferencing for a plurality of remotely located users can be a communication device that has a processor connected to a non-transitory computer readable medium and at least one interface for connecting to terminal devices of the users for transmission of the audio and video. The terminal devices of the users can be communication terminals that include a processor connected to a non-transitory computer readable medium and at least one interface for communicatively connecting to the device for providing audio and video conferencing. For example, the terminal devices can be telephone devices, smart phones, cellular phones, laptop computers or electronic tablets.

By utilization of an embodiment of the inventive method and configuration, so-called hijacking of the controlled device or second device is prevented, as nearly undoubtably, the controlling device may be verified to be a correct one. It is advantageously prevented to use location information provided by the controlled device itself, thereby preventing spoofing. According to the inventive method, the controlling device is identified as being in a close predetermined range of the controlled device, namely, nearby the controlled device and not remotely located. By using randomly acoustic signals or patterns, preferably, inaudible for humans, or an image generated by the controlling first device when pairing with a controlled second device applied to a challenge response procedure reliably secures their proximity and prevents misuse of confidential and personal information.

Other details, objects, and advantages of the telecommunications apparatus method will become apparent as the following description of certain exemplary embodiments thereof proceeds.

### BRIEF DESCRIPTION OF THE DRAWINGS

The invention and embodiments thereof will be described below in further detail in connection with the drawing. It should be understood that like reference characters used in the drawings may identify like components.
Fig. 1 shows a schematic scenario of first and second devices according to an embodiment of the invention;
Fig. 2 schematically illustrates the procedure of a method according to an embodiment of the invention; and
Fig. 3 schematically illustrates the procedure of a method according to another embodiment of the invention.

Reference numerals utilized in the drawings include:
1 -- first device (controlling device);
1' -- malicious first device;
2 -- second device (controlled device); and
3 - user

It should be appreciated that the first device 1, second device 2, and malicious device1' can each be an electronic device that include hardware. The hardware can include a processor connected to a non-transitory memory and at least one interface. Each interface can include a transceiver for a communication connection (e.g. cellular network transceiver, wireless local area network transceiver, Bluetooth transceiver, etc.). Each of these devices can also include at least one input device (e.g. pointer device, keyboard, etc.), at least one output device (e.g. display) and/or at least one input/output device (e.g. touch screen).

### DETAILED DESCRIPTION

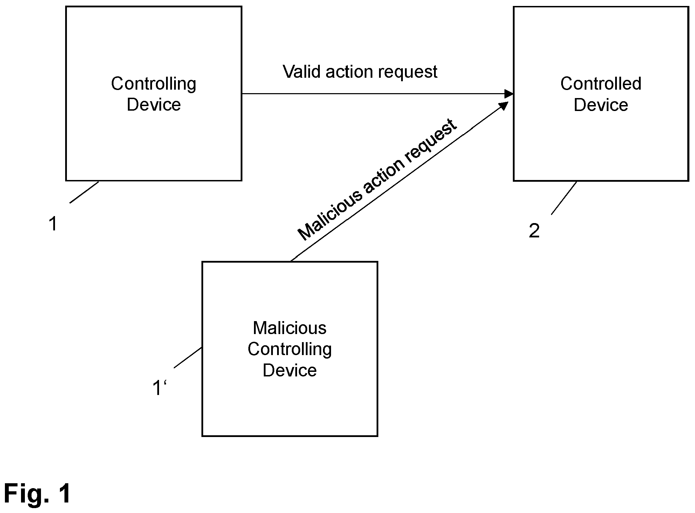

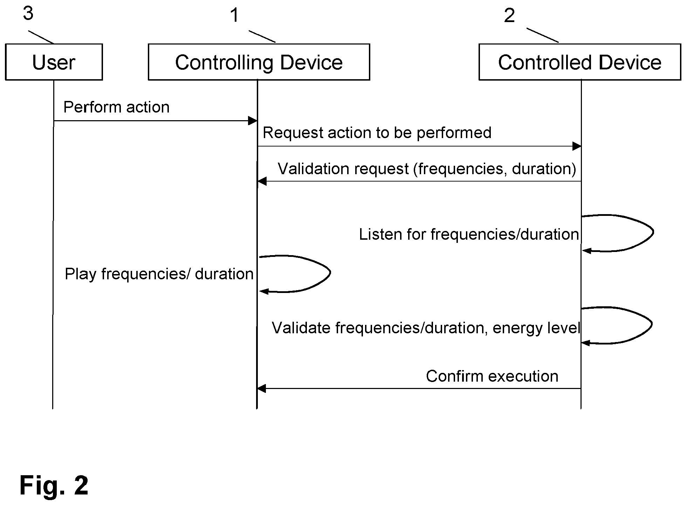

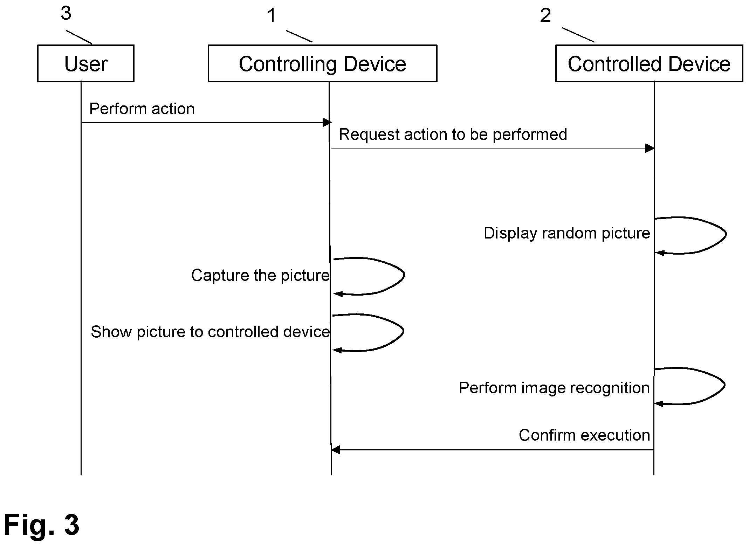

Fig. 1 shows a schematic scenario of first and second devices 1 and 2 according to an embodiment of the invention. Here, a first device 1 acting as a controlling device, as a mobile phone or a tablet, is shown that sends a valid action request to the second device 2 acting as a controlled device, as for example, a video conference room equipment like Circuit Meeting Room (CMR). The first and second devices 1, 2 are located within a predetermined range close to each other, for example, within a range of 0.1 to 5 meters. As the proximity of the first and second devices 1, 2 may be verified according to the method for authenticating the first device 1 that will be used for controlling the second device 2, as will be further explained with respect to Fig. 2 and Fig. 3 in more detail, the action request or control command issued by the first device 1 to the second device 2 may be validated and carried out by the second device 2.

The control command can be any number of different types of control commands. For instance, the control command can include a command for actuating at least one feature or function providable via the second device 2. For instance, the control command can include a command for turning a microphone and/or a camera of the second device 2 on or off. The control command can also include a command for the second device 2 to turn on or off at least one speaker of the second device 2 and/or at least one display of the second device 2. The control command can also, or alternatively be for controlling audio transmission, video transmission, audio output, audio recording, or screen sharing features of the second device 2. T

However, if an action request or control command is issued from a possibly malicious first device 1' to the second device 2 that is not within the predetermined range, then the action request or control command will be identified as being a malicious action request or control command and will not be carried out by the second device 2.

Fig. 2 schematically illustrates the procedure of a method according to an embodiment of the invention, wherein a user 3 intends to use his or her first device 1 as a controlling device for controlling the second device 2. As mentioned above, the first device 1 may be a mobile phone or a tablet of the user 3, by means of which the user 3 intends to control a CMR as a controlled or second device 2. Here, upon receiving a command from the controlling first device 1, the controlled second device 2 replies with a request to the controlling first device 1, requesting it to play an acoustic pattern comprising a sequence of tones in specific durations and/or frequencies, as a validation process basically according to a challenge/response procedure. The requested frequencies and/or durations are randomly generated for each validation process by the second device 2. The frequencies requested may also be inaudible for human beings. It is sufficient that they are detectable by the controlled second device 2 and the controlling first device 1. The request for an acoustic pattern can be provided by signaling or a sequence of signaling sent from the second device 2 to the first device 1 that is only detectable in an unobstructed close vicinity of the second device within the predetermined range. The request for the acoustic pattern can be made by the second device providing data identifying a particular acoustic pattern or by outputting via at least one speaker the acoustic pattern that the first device 1 is being requested to match or provide. The first device 1 can respond to the request sent by second device by having an acoustic pattern requested by the signaling or signaling pattern output (e.g. via a speaker of the first device). The controlled second device 2 can detect the frequencies and may optionally further detect the energy level so as to verify whether the requested pattern and the received pattern are matching and thus, to confirm that they are coming from a nearby device (e.g. via a microphone of the second device, etc.). Upon confirmation of the acoustic signal sequence or pattern, the controlled second device 2 performs the requested action.

It is noted that the controlled second device 2 may also be configured to request validation for every command or only after specific intervals. It should also be noted that the predetermined range for the transmission of the signaling related to the acoustic pattern matching can be the distance that the first device 1 would have to be from the second device 2 for the outputting of the acoustic pattern via the first device 1 to be received and detected by the second device 2 in this particular embodiment.

Fig. 3 schematically illustrates the procedure of a method according to another embodiment of the invention, wherein again a user 3 uses his or her first device 1 as a controlling device for controlling the second device 2. According to this embodiment, upon receiving a command from the controlling first device 1, the controlled second device 2 displays a randomly selected or randomly generated picture or sequence of pictures (e.g. video) on its screen. The controlling first device 1 can then capture the picture or sequence of pictures (e.g. video) and shows the captured picture(s) via its own display. Then, the controlled second device 2 performs an image recognition procedure via at least one camera sensor of the second device 2 to validate the controlling first device 1. Upon confirmation of the image(s) (e.g. single image, multiple images, a video, etc.), the controlled second device 2 executes and confirms the action. In one embodiment, the capturing of the picture performed by the first device 1 can be performed via at least one camera of the first device 1 or at least one camera sensor connected to the first device 1 that captures the picture generated and displayed by the second device 2.

It should be appreciated that the output of a generated image or sequence of images by the second device for validation via image capture and output by the first device can be considered the transmission of first signaling or a sequence of signaling sent from the second device 2 to the first device 1 that is only detectable in an unobstructed close vicinity of the second device within the predetermined range. The first device 1 displaying the image(s) captured from the display of the second device 2 via a camera sensor for the second device to then capture and analyze can be considered the first device sending a second signal or sequence of signaling to the second device. The predetermined range for the transmission of the signaling can be the distance required for image or video capturing by the devices in this particular embodiment.

As to the procedures described with respect to Fig. 2 and Fig. 3, optionally, a further step of logging and reporting on requests that were not correctly validated by the second device 2 may be carried out. For example, an indication of attempts by a malicious first device 1' (as shown in Fig. 1) may be issued by the second device 2. The logs and reports may capture information that can be used to track down the malicious first device 1, such as originating network address, user agent, etc.

Summarizing the above, according to embodiments of the method described above, an explicit device pairing in advance is not required. Rather, the requests are validated in real-time. This can allow several devices to act as controlling devices, as long as they are able to perform the validation process described above, namely, as long as they are located within the predetermined range with respect to the device to be controlled.

It should be appreciated that different embodiments of the method, system, and apparatus can be developed to meet different sets of design criteria. For example, the particular type of validation process utilized for the second device 2 to permit the first device 1 to control it can include other mechanisms in addition to, or as an alternative to, the exemplary acoustic matching or image capturing processes discussed above. As another example, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of a network, a communication system, a telecommunication apparatus, and methods of making and using the same have been shown and described above, it is to be distinctly understood that the invention is not limited thereto but may be otherwise variously embodied and practiced within the scope of the following claims.

## Claims

1. A method for authenticating a first device (1) that will be used for controlling a second device (2), wherein the first device (1) and the second device (2) are located within a predetermined range close to each other, the authentication method comprising the following steps:
- initially, receiving by the second device (2), a control command from the first device (1); the control command specifying a predetermined action to be performed by the second device (2);
- in response to the control command, initiating, by the second device (2), a validation procedure by sending a first signal or signal sequence to the first device (1), wherein the first signal or signal sequence is only detectable in an unobstructed close vicinity of the second device (2) within the predetermined range;
**characterized in that**
- receiving, by the second device (2), a second signal or signal sequence from the first device (1);
- verifying, by the second device (2), whether the second signal or signal sequence matches the first signal or signal sequence, and, if the matching of the first and second signals or the first and second signal sequences is confirmed,
- performing, by the second device (2), the action specified by the control command issued by the first device (1).

2. The method according to claim 1, wherein the first signal or signal sequence and the second signal or signal sequence is an acoustic signal or signal sequence, in particular, an acoustic pattern comprising a sequence of tones in specific durations and frequencies.

3. The method according to claim 2, wherein the acoustic signal or signal sequence is inaudible for a human being.

4. The method according to claim 1, wherein the first signal or signal sequence and the second signal or signal sequence is an image or video.

5. The method according to claim 4, wherein the verifying step is an image recognition procedure.

6. The method according to claim 1, wherein the first signal or signal sequence is randomly generated.

7. The method according to claim 1, wherein the first device (1) is a mobile device.

8. The method according to claim 1, wherein the second device (2) is a device for providing audio and video conferencing for a plurality of remote located users.

9. The method according to claim 1, wherein the control command is a command for turning a microphone and/or a camera of the second device (2) on or off.

10. The method according to claim 1, wherein in the verifying step, if the matching of the first and second signals or the first and second signal sequences is not confirmed, a step of issuing a report, by the second device (2), comprising information on a malicious control attempt.

11. The method according to claim 9, wherein the report further comprises information on the device that initiated the malicious control attempt, in particular, an originating network address, or a user agent.

12. The method according to claim 9, wherein the verification procedure is carried out in real-time.

13. A communication system comprising:
a device for providing audio and video conferencing in a virtual conference room for a plurality of remotely located users, which is configured to carry out the method according to claim 1.

## Patentansprüche

1. Verfahren zur Authentifizierung einer ersten Vorrichtung (1), die zur Steuerung einer zweiten Vorrichtung (2) verwendet wird, wobei die erste Vorrichtung (1) und die zweite Vorrichtung (2) innerhalb eines vorbestimmten Bereichs nahe beieinander angeordnet sind, wobei das Authentifizierungsverfahren die folgenden Schritte umfasst:
- zunächst Empfangen, durch die zweite Vorrichtung (2), eines Steuerbefehls der ersten Vorrichtung (1), wobei der Steuerbefehl eine vorbestimmte Aktion spezifiziert, die von der zweiten Vorrichtung (2) durchzuführen ist;
- als Reaktion auf den Steuerbefehl, Initiieren, durch die zweite Vorrichtung (2), eines Validierungsprozesses durch Senden eines ersten Signals oder einer Signalsequenz an die erste Vorrichtung (1), wobei das erste Signal oder die Signalsequenz nur in einer ungehinderten Nähe der zweiten Vorrichtung (2) innerhalb des vorbestimmten Bereichs detektierbar ist;
**dadurch gekennzeichnet, dass**
- die zweite Vorrichtung (2) ein zweites Signal oder eine zweite Signalsequenz von der ersten Vorrichtung (1) empfängt;
- durch die zweite Vorrichtung (2) überprüft wird, ob das zweite Signal oder die zweite Signalsequenz mit dem ersten Signal oder der ersten Signalsequenz übereinstimmt, und, wenn die Übereinstimmung des ersten und des zweiten Signals oder der ersten und der zweiten Signalsequenz bestätigt wird,
- Ausführen der Aktion, die durch den von der ersten Vorrichtung (1) erteilten Steuerbefehl spezifiziert ist, durch die zweite Vorrichtung (2).

2. Verfahren nach Anspruch 1, wobei das erste Signal oder die erste Signalsequenz und das zweite Signal oder die zweite Signalsequenz ein akustisches Signal oder eine akustische Signalsequenz ist, insbesondere ein akustisches Muster, das eine Folge von Tönen in bestimmten Dauern und Frequenzen umfasst.

3. Verfahren nach Anspruch 2, wobei das akustische Signal oder die Signalsequenz für einen Menschen unhörbar ist.

4. Verfahren nach Anspruch 1, wobei das erste Signal oder die erste Signalsequenz und das zweite Signal oder die zweite Signalsequenz ein Bild oder Video sind.

5. Verfahren nach Anspruch 4, wobei der Überprüfungsschritt ein Bilderkennungsverfahren ist.

6. Verfahren nach Anspruch 1, wobei das erste Signal oder die erste Signalsequenz zufällig erzeugt wird.

7. Verfahren nach Anspruch 1, wobei das erste Gerät (1) ein mobiles Gerät ist.

8. Verfahren nach Anspruch 1, wobei die zweite Vorrichtung (2) eine Vorrichtung zur Bereitstellung von Audio- und Videokonferenzen für eine Vielzahl von Benutzern an entfernten Standorten ist.

9. Verfahren nach Anspruch 1, wobei der Steuerbefehl ein Befehl zum Ein- oder Ausschalten eines Mikrofons und/oder einer Kamera des zweiten Geräts (2) ist.

10. Verfahren nach Anspruch 1, wobei bei dem Überprüfungsschritt, wenn die Übereinstimmung der ersten und zweiten Signale oder der ersten und zweiten Signalsequenzen nicht bestätigt wird, die zweite Vorrichtung (2) einen Bericht erstellt, der Informationen über einen böswilligen Kontrollversuch enthält.

11. Verfahren nach Anspruch 9, wobei der Bericht ferner Informationen über das Gerät enthält, das den böswilligen Kontrollversuch initiiert hat, insbesondere eine Ursprungsnetzadresse oder einen Benutzeragenten.

12. Verfahren nach Anspruch 9, wobei das Überprüfungsverfahren in Echtzeit durchgeführt wird.

13. Kommunikationssystem, umfassend:
eine Vorrichtung zum Bereitstellen von Audio- und Videokonferenzen in einem virtuellen Konferenzraum für eine Vielzahl von Benutzern an entfernten Standorten, die so konfiguriert ist, dass sie das Verfahren nach Anspruch 1 ausführt.

## Revendications

1. Procédé d'authentification d'un premier appareil (1) destiné à contrôler un second appareil (2), dans lequel le premier appareil (1) et le second appareil (2) sont situés à proximité l'un de l'autre dans un rayon prédéterminé, le procédé d'authentification comprenant les étapes suivantes :
- dans un premier temps, réception par le deuxième appareil (2) d'une commande de contrôle provenant du premier appareil (1), la commande de contrôle spécifiant une action prédéterminée à effectuer par le deuxième appareil (2) ;
- en réponse à la commande de contrôle, lancement, par le deuxième appareil (2), d'une procédure de validation en envoyant un premier signal ou une première séquence de signaux au premier appareil (1), le premier signal ou la première séquence de signaux n'étant détectable qu'à proximité immédiate et sans obstacle du deuxième appareil (2) dans le rayon prédéterminé ;
**caractérisé en ce que**
- le second appareil (2) reçoit un second signal ou une seconde séquence de signaux en provenance du premier appareil (1) ;
- le deuxième appareil (2) vérifie si le second signal ou la seconde séquence de signaux concorde avec le premier signal ou la première séquence de signaux et, si la concordance des premier et deuxième signaux ou des première et deuxième séquences de signaux est confirmée,
- le deuxième appareil (2) exécute l'action spécifiée par la commande de contrôle émise par le premier appareil (1).

2. Procédé selon la revendication 1, dans lequel le premier signal ou la première séquence de signaux et le second signal ou la seconde séquence de signaux sont un signal acoustique ou une séquence de signaux acoustiques, en particulier un schéma acoustique comprenant une séquence de tons dans des durées et des fréquences spécifiques.

3. Procédé selon la revendication 2, dans lequel le signal acoustique ou la séquence de signaux acoustiques est inaudible pour un être humain.

4. Procédé selon la revendication 1, dans lequel le premier signal ou la première séquence de signaux et le second signal ou la seconde séquence de signaux sont une image ou une vidéo.

5. Procédé selon la revendication 4, dans lequel l'étape de vérification est une procédure de reconnaissance d'image.

6. Procédé selon la revendication 1, dans lequel le premier signal ou la première séquence de signaux est généré(e) de manière aléatoire.

7. Procédé selon la revendication 1, dans lequel le premier appareil (1) est un appareil mobile.

8. Procédé selon la revendication 1, dans lequel le deuxième appareil (2) est un appareil permettant d'organiser des conférences audio et vidéo pour une pluralité d'utilisateurs se trouvant à distance.

9. Procédé selon la revendication 1, dans lequel la commande de contrôle est une commande d'activation ou de désactivation d'un microphone et/ou d'une caméra du deuxième appareil (2).

10. Procédé selon la revendication 1, dans lequel, lors de l'étape de vérification, si la correspondance des premier et deuxième signaux ou des première et deuxième séquences de signaux n'est pas confirmée, le deuxième appareil (2) émet un rapport comprenant des informations sur une tentative de contrôle malveillant.

11. Procédé selon la revendication 9, dans lequel le rapport comprend également des informations sur l'appareil à l'origine de la tentative de contrôle malveillant, en particulier une adresse réseau d'origine ou un agent utilisateur.

12. Procédé selon la revendication 9, dans lequel la procédure de vérification est effectuée en temps réel.

13. Système de communication comprenant :
un appareil permettant d'organiser des conférences audio et vidéo dans une salle de conférence virtuelle pour une pluralité d'utilisateurs se trouvant à distance, configuré pour exécuter le procédé selon la revendication 1.
